# EUROPÄISCHE PATENTSCHRIFT

(11) **EP 3 047 247 B1**
(45) Veröffentlichungstag und Bekanntmachung des Hinweises auf die Patenterteilung: **15.03.2017**
(21) Anmeldenummer: 14766485.8
(22) Anmeldetag: 16.09.2014
(51) Int. Cl.: G01K 1/12

(54) **MESSSONDE FÜR HOCHTEMPERATURMESSUNGEN IN FLÜSSIGEN MEDIEN**
MEASURING PROBE FOR MEASURING HIGH TEMPERATURES IN LIQUID SUBSTANCES
SONDE DE MESURE POUR EFFECTUER DES MESURES À HAUTES TEMPÉRATURES DANS DES SUBSTANCES FLUIDES

(30) Priorität: 16.09.2013 DE 102013218463
(43) Veröffentlichungstag der Anmeldung: 27.07.2016
(73) Patentinhaber: SMS group GmbH, 40237 Düsseldorf (DE); Endress+Hauser Wetzer GmbH+Co. KG, 87484 Nesselwang (DE)
(72) Erfinder: SÖNTGEN, Thomas, 46499 Hamminkeln (DE); DEPPENKEMPER, Anna, 47918 Tönisvorst (DE); GINTIKAS, Ilias, 57271 Hilchenbach (DE); HATTENHORST, Sven, 40764 Langenfeld (DE)
(74) Vertreter: Klüppel, Walter
(86) Internationale Anmeldenummer: PCT/EP2014/069741
(87) Internationale Veröffentlichungsnummer: WO 2015/036625

(56) Entgegenhaltungen:
- EP-A1- 0 454 846
- US-A- 2 948 766
- US-A- 4 747 883

## Beschreibung

Die Erfindung richtet sich auf eine Messsonde umfassend einen Sondenkopf und einen daran angeordneten Sondenkörper, der eine, mit ihrem offenen Ende in dem Sondenkopf befestigte äußere Schutzkappe aus einem hochverdichteten keramischen Feuerfestmaterial und ein darin koaxial unter Ausbildung eines Zwischenraumes angeordnetes und ebenfalls im Sondenkopf befestigtes inneres Schutzrohr aus einem hochtemperaturfesten Isolatormaterial aufweist, in welchem ein aus einem Thermopaar bestehendes Thermoelement angeordnet ist, dessen Messspitze sich im dem Sondenkopf abgewandten Endbereich des Schutzrohres befindet.

Weiterhin richtet sich die Erfindung auf ein eine solche Messsonde umfassendes Messsystem sowie die Verwendung einer solchen Messsonde.

Messsonden, die als Tauchsonden zur Temperaturmessung in flüssigen Medien ausgebildet sind und welche die Temperaturmessung mit Hilfe von Thermospannungen erzeugenden Thermoelementen messen, sind im Stand der Technik allgemein bekannt, siehe z.B. US 2 948 766 A, EP 0 454 846 A1, US 4 747 833 A und WO 2010/094464 A2.

So offenbart die WO 2010/094464 A2 bereits eine gattungsgemäße Messsonde, mit welcher die Temperatur von Metallschmelzen kontinuierlich gemessen werden kann. Die bekannte Messsonde wird durch die Wand eines Schmelzbehälters in den Schmelzbehälterinnenraum eingeführt und tritt in Kontakt mit einer im Schmelzbehälter befindlichen Schmelze.

Messsonden dieser Art zeigen bei der Anwendung im Hochtemperaturbereich Probleme und Nachteile, die auf Oxidationsvorgängen an den drahtförmigen Thermopaaren des Thermoelementes und/oder der fehlenden Hochtemperaturfestigkeit bei ihrer Verwendung in einer Metallschmelze, insbesondere Stahlschmelze, beruhen, so dass eine solche Sonde für den Dauermessbetrieb unter Industriebedingungen nicht ausreichend oder zumindest verbesserungsfähig ist. Zwar beschreibt die WO 2010/094464 A2 bereits die Verwendung eines Sauerstoff reduzierenden Materials. Dies hat sich aber als nicht ausreichende Maßnahme erwiesen, da weiterhin unerwünschte Korrosionsbildung bei der Verwendung dieser bekannten Messsonden als Hochtemperaturmesssonde im kontinuierlichen Dauerbetrieb auftritt.

Der Erfindung liegt die Aufgabe zu Grunde eine Lösung zu schaffen, die im Hinblick auf ihre Verwendung als Hochtemperaturmesssonde für kontinuierliche Dauer- oder Langzeittemperaturmessungen eine verbesserte Messsonde bereitstellt.

Bei einer Messsonde der eingangs näher bezeichneten Art wird diese Aufgabe erfindungsgemäß dadurch gelöst, dass zumindest der freie Innenraum des inneren Schutzrohres mit einen Inertgas befüllt, vorzugsweise vollständig gefüllt, ist.

Von Vorteil ist es hierbei weiterhin, dass die Schutzkappe gasdicht ausgebildet und gasdicht im Sondenkopf befestigt ist sowie der freie Innenraum der Schutzkappe und der freie Innenraum des Schutzrohres mit einem Inertgas befüllt, vorzugsweise vollständig gefüllt, sind, was die Erfindung ebenfalls vorsieht.

Ebenso wird die vorstehende Aufgabe gelöst durch ein Messsystem, das eine Messsonde nach einem der Ansprüche 1 - 13 und ein mit dem freien Innenraum des inneren Schutzrohres und/oder der Schutzkappe in einer Inertgas führenden Leitungsverbindung stehendes Ausgleichsbehältnis, insbesondere Membrangefäß, umfasst sowie die Verwendung einer Messsonde nach einem der Ansprüche 1 - 13 oder eines Messsystems nach Anspruch 13 als Tauchsonde zur kontinuierlichen Dauertemperaturmessung in schmelzflüssigen Medien, die eine Temperatur zwischen 1.000°C und 2.100°C aufweisen.

Mit der erfindungsgemäßen Messsonde lassen sich aufgrund der Befüllung des freien Innenraums der Schutzkappe und des Schutzrohres mit einem Inertgas Hochtemperaturmessungen in flüssigen Medien wie beispielsweise metallurgischen Schmelzen, flüssigen Siliziumlegierungen oder flüssigem Silizium bei Badtemperaturen von bis zu 2.100°C vornehmen und dies auch als Dauer-oder Langzeittemperaturmessung, insbesondere auch in Stahl- oder Eisenschmelzen. Durch die Befüllung des freien Innenraums der Messsonde, insbesondere die Befüllung des freien Innenraums des das jeweilige Thermodrahtpaar umgebenden inneren Schutzrohres und des freien Innenraums der dieses umgebenden Schutzkappe, wird bei der Befüllung noch in diesem Freiraum oder diesen Freiräumen befindlicher Sauerstoff verdrängt. Nach der Befüllung, wobei zumindest das innere Schutzrohr vollständig mit Inertgas befüllt wird, vorzugsweise aber sowohl das innere Schutzrohr als auch die Schutzkappe vollständig mit Inertgas befüllt werden, befindet sich im Inneren der Messsonde kein Sauerstoff mehr, so dass eine durch den Sauerstoff bewirkte Oxidation nicht erfolgen kann.

Dadurch wird die Langlebigkeit und damit die Praxistauglichkeit dieser erfindungsgemäßen Messsonde unter den rauen Industriebedingungen im Heißbereich von Hochtemperaturschmelzen verbessert, was insbesondere bei kontinuierlichen Dauer- oder Langzeittemperaturmessungen von Vorteil ist. Derartige erfindungsgemäße Messsonden lassen sich somit in in Hüttenwerken verwendeten Aggregaten wie Konvertern, Elektrolichtbogenöfen oder ähnlichen verwenden, in welchen Metallschmelzen metallurgisch aufbereitet oder behandelt werden. Insbesondere ist es mit der erfindungsgemäßen Messsonde möglich, kontinuierlich beispielsweise während eines Gieß- oder Schmelzprozesses die genaue Temperatur des Schmelzbades zu erfassen. Dies kann zur Optimierung des Produktionsprozesses und einer damit einhergehenden Kostenersparnis genutzt werden. Zudem ermöglicht die genaue Temperaturmessung auch im Hochtemperaturbereich eine genaue und exakte Temperaturführung des Schmelzbades, so dass temperaturabhängige Produktschwankungen vermieden und eine gute und gleichmäßige Produktqualität sichergestellt werden kann. Je nach Anwendungsfall lassen sich hierbei gegebenenfalls auch die Produktionszeiten aufgrund einer exakten Kenntnis der Temperaturführung verringern.

In der Ausgestaltung sieht die Erfindung vor, dass der freie Innenraum der Schutzkappe und der freie Innenraum des Schutzrohres miteinander in einer Inertgas führenden Strömungsverbindung stehen. Hierdurch ist es möglich, Strömungsverbindungen und Strömungsflüsse zwischen der Schutzkappe und dem Schutzrohr herzustellen und aufrechtzuerhalten, die beispielsweise bei einer temperaturabhängigen Ausdehnung oder Zusammenziehung des Inertgases einen problemlosen Austausch möglich machen.

Um eine Befüllung mit Inertgas zu ermöglichen, sieht die Erfindung vor, dass der Sondenkopf eine Inertgaszuleitung aufweist, die mit dem dem Sondenkopf zugewandten Ende des Schutzrohres in einer Inertgas führenden Strömungs- und/oder Leitungsverbindung steht. Damit kann über den Messsondenkopf gewünschtenfalls auch im Betrieb der Tauchsonde Inertgas der Messsonde zugeführt und der freie Innenraum von Schutzkappe und Schutzrohr mit Inertgas nachgefüllt oder gespült werden. Insbesondere wird hierdurch erreicht, dass die Befüllung der Messsonde durch das Schutzrohr hindurch erfolgt, so dass das in diesem Schutzrohr angeordnete drahtförmige Thermopaar als Thermoelement immer sicher von Inertgas umspült und umgeben ist und insbesondere im Innenraum des Schutzrohres anfangs nach dem Zusammenbau der Messsonde noch vorhandener Sauerstoff verdrängt und aus dem Innenraum herausgespült wird.

Ebenso kann in weiterer Ausgestaltung der Erfindung vorgesehen sein, dass der Sondenkopf eine Inertgasableitung aufweist, die mit dem dem Sondenkopf zugewandten offenen Ende der Schutzkappe in einer Inertgas oder einem Teil des Inertgases führenden Strömungs- und/oder Leitungsverbindung steht. Hierdurch ist es möglich, die Inertgasbefüllung oder einen Teil des Inertgases aus der Messsonde abzuführen, was gewünschtenfalls auch während des Betriebes der Messsonde erfolgen kann.

Um den Abfluss und den Zufluss an Inertgas beeinflussen zu können sieht die Erfindung weiterhin vor, dass in der Inertgaszuleitung ein Einlassventil und in der Inertgasableitung ein Auslassventil angeordnet ist. Hierbei kann insbesondere das Auslassventil als Überdruckventil ausgebildet sein, so dass bei einem über einen Grenzwert ansteigenden Innendruck der Messsonde, beispielsweise aufgrund einer unerwünscht hohen Temperatur, Inertgas aus dem freien Innenraum der Schutzkappe aus der Messsonde austreten kann.

Von weiterem Vorteil ist gemäß weiterer Ausgestaltung der Erfindung insbesondere, dass die Inertgaszuleitung und/oder die Inertgasableitung in Leitungsverbindung mit einem entfernt angeordneten Ausgleichsbehältnis steht/stehen. Hierdurch ist es möglich, temperaturabhängig Inertgas aus der Messsonde in das Ausgleichsgefäß abzugeben oder von dem Ausgleichsgefäß aufzunehmen. Durch die spezielle Anordnung von Inertgaszuleitung, Schutzrohr, Schutzkappe und Inertgasableitung und deren Leitungsverbindung zu dem Ausgleichsbehältnis lässt sich ein Inertgaskreislauf zwischen dem Ausgleichsbehältnis und der erfindungsgemäßen Messsonde ausbilden und aufrechterhalten.

Um das Thermoelement und/oder das Schutzrohr vor von außen einwirkenden Vibrationen oder Schwingungen zu schützen, sieht die Erfindung weiterhin vor, dass der freie Innenraum der Schutzkappe und/oder der freie Innenraum des Schutzrohres mit einem isolierend wirkenden Pulvermaterial befüllt ist/sind. Diese - insbesondere teilweise - Befüllung des jeweiligen Inneraumes mit einem solchen Pulvermaterial wirkt dämpfend gegenüber von außen einwirkenden Vibrationen, Schwingungen oder Erschütterungen.

Besonders zweckmäßig ist es hierbei, wenn das Pulvermaterial aus Siliziumnitrid oder Aluminiumoxid besteht oder dieses enthält, was die Erfindung ebenfalls vorsieht. Hierbei handelt es sich bei dem Siliziumnitrid um temperaturtechnisch behandeltes, nicht leitendes Siliziumnitrid in Form eines Feinstpulvers.

Als hochverdichtetes, hochtemperaturfestes Isolatormaterial aus welchem das gasdichte innere Schutzrohr besteht, eignet sich insbesondere Aluminiumoxid, weshalb sich die Erfindung in weiterer Ausgestaltung dadurch auszeichnet, dass das Isolatormaterial aus Aluminiumoxid besteht oder dieses enthält.

Bei dem hochverdichteten keramischen Feuerfestmaterial, aus welchem die äußere Schutzkappe besteht, kann es sich um übliche Feuerfestmaterialien oder Feuerfestmassen handeln, die Siliziumnitrid, Siliziumcarbid, Bornitrit, Borcarbid oder Aluminiumoxid enthalten oder aus diesen bestehen.

Für die Anwendung der erfindungsgemäßen Messsonde in einem Metallbad sehr hoher Temperatur, insbesondere einer Stahlschmelze, wobei die Messsonde zur Durchführung von Hochtemperaturdauermessungen in das Schmelzbad eingetaucht wird; ist von besonderem Vorteil, wenn die äußere Schutzkappe aus einem hochreinen Siliziumcarbid oder -nitrid oder einem hochreinen Siliziumcarbid oder -nitrid besteht, was die Erfindung ebenfalls vorsieht. Unter "hochrein" werden hierbei solche Materialien verstanden, die einen Reinheitsgrad von aufweisen.

Als Thermoelement können die verschiedensten, insbesondere drahtförmigen, Thermopaare verwendet werden. Als besonders zweckmäßig hat es sich gemäß erfindungsgemäßer Weiterbildung erwiesen, wenn die Thermopaare des Thermoelements aus einer Wolfram- und/oder Platinlegierung bestehen und/oder die Thermopaare oder das Thermoelement vom Typ B, R, S, G, C oder D ist/sind. Hierbei bezieht sich die Typenbezeichnung B, R, S auf die Norm DIN EN 60584, wohingegen es sich bei den Typen G, C und D um Wolfram/Rhenium-Thermopaare handelt, die nicht genormt sind.

Um auch während einer Messphase einen beispielsweise durch eine temperaturabhängige Ausdehnung des verwendeten Inertgases bewirkten Druckanstieg im Innern der Messsonde zu vermeiden, zeichnet sich die Erfindung weiterhin dadurch aus, dass die Messsonde Bestandteil eines Messsystems ist, das die Messsonde und ein mit dem freien Innenraum des inneren Schutzrohres und/oder der Schutzkappe in einer Inertgas führenden Leitungsverbindung stehendes Ausgleichsbehältnis, insbesondere Membrangefäß, umfasst.

Als Inertgase finden zweckmäßigerweise Argon, Stickstoff oder Helium Verwendung. Insbesondere wird durch die Zuführung von Inertgas aus dem Schutzrohr noch anhaftender Sauerstoff verdrängt und ausgespült, so dass ein Oxidationsprozess des jeweiligen Thermoelementes und der jeweils verwendeten Thermopaare anschließend nicht mehr möglich ist. Hierzu wird bei der Herstellung der Messsonde über eine reine Befüllung der freien Innenräume hinausgehend eine Spülung zumindest des Innenraumes des Schutzrohres, vorzugsweise aber der freien Innenräume von Schutzrohr und Schutzkappe, mittels des dieses/diese durchströmenden und wieder abgeführten Inertgases durchgeführt.

Die Erfindung ist nachstehend anhand einer Zeichnung beispielhaft näher erläutert.

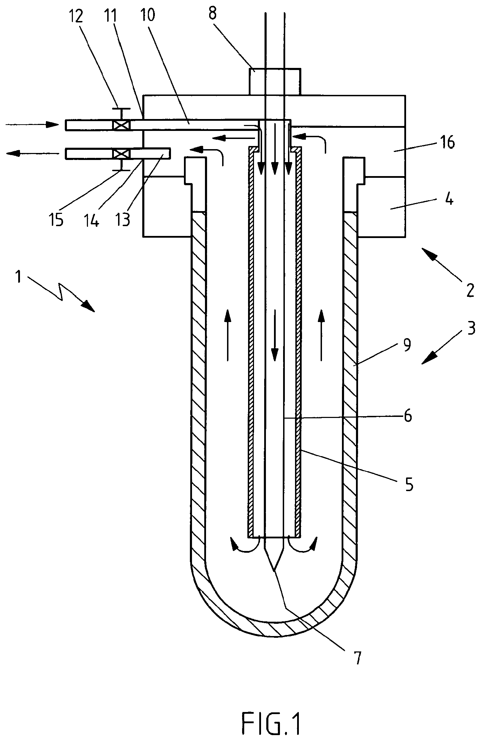

Die einzige Figur zeigt in schematischer Schnittdarstellung eine insgesamt mit 1 bezeichnete Messsonde. Die Messsonde 1 besteht aus einem Sondenkopf 2 und einem daran angeordneten Sondenkörper 3. Der Sondenkopf 2 weist einen Anschlusskopf 16 und einen Anschlusssockel 4 auf. In dem Anschlusskopf 16 ist zentral und mittig ein inneres Schutzrohr 5 angeordnet und befestigt, das wie bei derartigen Thermoelementen und Messsonden üblich, eine deutlich aus dem Sondenkopf 2 herausführende Längserstreckung aufweist. In dem freien Innenraum des inneren Schutzrohres 5 ist ein aus zwei Drähten, die ein Thermopaar darstellen, gebildetes Thermoelement 6 angeordnet, das sich längs des gesamten inneren Schutzrohres 5 erstreckt und dessen Messspitze 7 sich in dem dem Sondenkopf 2 abgewandten Endbereich des Schutzrohres 5 befindet, wobei diese Messspitze 7 im Ausführungsbeispiel außerhalb des Schutzrohres 5 liegt. Die Drähte des Thermopaares sind an der der Messspitze 7 gegenüberliegenden Seite des Thermoelementes 6 auf übliche Art und Weise an einer nicht näher dargestellten Anschlussstelle 8 aus dem Anschlusskopf 16 herausgeführt. Koaxial zu dem inneren Schutzrohr 5 und dieses unter Belassung eines Freiraumes kappenförmig umhüllend ist im Anschlusssockel 4 des Sondenkopfes 2 eine äußere Schutzkappe 9 aus einem hochverdichtetem keramischen Feuerfestmaterial befestigt. Die Schutzkappe 9 ist gasdicht ausgebildet und gasdicht im Sondenkopf 2, im Ausführungsbeispiel im Anschlusssockel 4 des Sondenkopfes 2, befestigt. Der freie Innenraum der Schutzkappe 9 steht in Strömungsverbindung mit der der Messspitze 7 des Thermoelementes zugewandten Mündungsöffnung des inneren Schutzrohres 5. Die gegenüberliegende Mündungsöffnung des Schutzrohres 5 steht in Leitungsverbindung mit einer im Sondenkopf 2 ausgebildeten Inertgaszuleitung 10, die eine aus dem Sondenkopf 2 herausführende Mündungsöffnung 11 aufweist, in deren Bereich ein Einlassventil 12 angeordnet ist, so dass das dem Sondenkopf 2 zugewandte Ende des Schutzrohres 5 mit der Inertgaszuleitung 10 in einer Strömungsverbindung steht. Weiterhin weist der Sondenkopf 2 eine Inertgasableitung 13 auf, in deren Mündungsbereich 14 ein Auslassventil 15 angeordnet ist, welche Inertgasleitung 13 in Leitungs- und Strömungsverbindung mit dem freien Innenraum der äußeren Schutzkappe 9 steht. Auf diese Weise ist es, wie dies durch Pfeile in der Figur angedeutet ist, möglich, bei geöffnetem Einlassventil 12 durch die Mündungsöffnung 11 in die Inertgaszuleitung 10 Inertgas einströmen zu lassen, welches dann in den freien Innenraum des inneren Schutzrohres 5 einströmt. Von dort strömt das Inertgas in den freien Innenraum der Schutzkappe 9 aus und kann dann bei geöffnetem Auslassventil 15 durch die Inertgasableitung 13 und die Mündungsöffnung 14 wieder aus der Messsonde austreten. Auf diese Weise kann eine Durchspülung des freien Innenraumes der Messsonde 1 durchgeführt werden. In nicht näher dargestellter Weise stehen die Inertgaszuleitung 10 und die Inertgasableitung 13 mit einem entfernteren, insbesondere nicht mehr im Heißbereich, in welchem die Messsonde 1 als Tauchsonde zur Temperaturmessung in einer heißen, hochtemperierten Schmelze verwendet wird, angeordneten Ausgleichsbehälter, insbesondere einem Membrangefäß, in Intergas führender Leitungsverbindung. Damit ist dann zwischen dem Ausgleichsbehältnis oder -behälter und dem freien Innenraum der Messsonde 1 die Ausbildung eines Inertgaskreislaufes möglich, der sich beispielsweise in Abhängigkeit von Temperaturschwankungen dadurch ergeben kann, dass sich das in der Messsonde 1 befindliche Inertgas ausdehnt oder zusammenzieht.

In nicht dargestellter Weise können sowohl der freie Innenraum des inneren Schutzrohres 5 als auch der freie Innenraum der Schutzkappe 9 zumindest teilweise mit einem äußerst feinkörnigen, isolierend wirkenden Pulvermaterial befüllt sein, das von außen einwirkende Schwingungen oder Erschütterungen dämpft und somit als Dämpfungsmaterial gegenüber dem inneren Schutzrohr 5 und der Schutzkappe 9 wirksam wird. Dieses Pulvermaterial kann aus Siliziumnitrid oder Aluminiumoxid bestehen oder dieses enthalten. Es ist aber auch möglich, lediglich den freien Innenraum der Schutzkappe 9 mit diesem Pulvermaterial auszustatten,

Als Isolatormaterial, aus welchem das innere Schutzrohr 5 besteht oder hergestellt wird, eignet sich insbesondere Aluminiumoxid.

Die äußere Schutzkappe 9 besteht aus einem hochreinen Siliziumcarbid oder - nitrid. Unter hochrein werden solche Siliziumcarbid oder -nitrid Materialen verstanden, bei denen zur Herstellung ein Silizium mit einem Reinheitsgrad von mindestens 99 % verwendet wird. Der optimale Reinheitsgrad liegt hier bei 99,9% und 99,999%.

Die Thermopaare des Thermoelementes bestehen bevorzugt aus einer Wolfram- und/oder Platinlegierung. Besonders zweckmäßig sind die Thermopaare der Typen B, R, S, G, C oder D, wobei die Typen B, R und S gemäß DIN EN 60584 bezeichnet sind. Bei den weiteren Typen handelt es sich um bekannte, aber nicht genormte Thermopaare.

### Bezugszeichenliste

- 1: Messsonde
- 2: Sondenkopf
- 3: Sondenkörper
- 5: Schutzrohr
- 6: Thermoelement
- 7: Messspitze
- 9: Schutzkappe
- 10: Inertgaszuleitung
- 13: Intergasableitung
- 15: Auslassventil

## Patentansprüche

1. Messsonde (1) umfassend einen Sondenkopf (2) und einen daran angeordneten Sondenkörper (3), der eine, mit ihrem offenen Ende in dem Sondenkopf (2) befestigte äußere Schutzkappe (9) aus einem hochverdichteten keramischen Feuerfestmaterial und ein darin koaxial unter Ausbildung eines Zwischenraumes angeordnetes und ebenfalls im Sondenkopf (2) befestigtes inneres Schutzrohr (5) aus einem hochtemperaturfesten Isolatormaterial aufweist, in welchem ein Thermoelement (6) angeordnet ist, dessen Messspitze (7) sich im dem Sondenkopf (2) abgewandten Endbereich des inneren Schutzrohres (5) befindet, wobei
die äußere Schutzkappe (9) gasdicht ausgebildet und gasdicht im Sondenkopf (2) befestigt ist sowie der freie Innenraum der Schutzkappe (9) und der freie Innenraum des inneren Schutzrohres (5) mit einem Inertgas befüllt sind und miteinander in einer Inertgas führenden Strömungsverbindung stehen,
**dadurch gekennzeichnet,**
**dass** der Sondenkopf (2) eine Inertgaszuleitung (10) aufweist, die mit dem dem Sondenkopf (2) zugewandten Ende des Schutzrohres (5) in einer Inertgas führenden Strömungs- und/oder Leitungsverbindung steht und
**dass** der Sondenkopf (2) eine Inertgasableitung (13) aufweist, die mit dem dem Sondenkopf (2) zugewandten offenen Ende der Schutzkappe (9) in einer Inertgas führenden Strömungs- und/oder Leitungsverbindung steht und
**dass** die Inertgaszuleitung (10) und die Inertgasableitung (13) derart in einer Inertgas führenden Leitungsverbindung mit einem entfernt angeordneten Ausgleichsbehältnis stehen, dass zwischen dem Ausgleichsbehältnis und dem freien Innenraum der Messsonde (1) ein Inertgaskreislauf ausgebildet ist und aufrechterhalten wird, der dadurch, dass sich in der Messsonde (1) befindliches Inertgas in Abhängigkeit von Temperaturschwankungen zusammenzieht oder ausdehnt, temperaturabhängig Inertgas in das Ausgleichsbehältnis abgibt oder von dem Ausgleichsgefäß aufnimmt.

2. Messsonde nach einem der vorhergehenden Ansprüche, **dadurch gekennzeichnet, dass** in der Inertgaszuleitung (10) ein Einlassventil (12) und der Inertgasableitung (13) ein Auslassventil (15) angeordnet ist.

3. Messsonde nach Anspruch 1, **dadurch gekennzeichnet, dass** der freie Innenraum der Schutzkappe (9) und/oder der freie Innenraum des Schutzrohres (5) mit einem isolierend wirkenden Pulvermaterial befüllt ist/sind.

4. Messsonde nach Anspruch 3, **dadurch gekennzeichnet, dass** das Pulvermaterial aus Siliziumnitrid oder Aluminiumoxid besteht oder dieses enthält.

5. Messsonde nach einem der vorhergehenden Ansprüche, **dadurch gekennzeichnet, dass** das Isolatormaterial des Schutzrohres (5) aus Aluminiumoxid besteht oder dieses enthält.

6. Messsonde nach einem der vorhergehenden Ansprüche, **dadurch gekennzeichnet, dass** die äußere Schutzkappe (9) aus einem hochreinen Siliziumcarbid oder -nitrid oder einem hochreinen Borcarbid oder -nitrid besteht.

7. Messsonde nach einem der vorhergehenden Ansprüche, **dadurch gekennzeichnet, dass** die Thermopaare des Thermoelements (6) aus einer Wolfram- und/oder Platinlegierung bestehen und/oder die Thermopaare oder das Thermoelement (6) vom Typ B, R, S, G, C oder D ist/sind.

8. Messsonde nach einem der vorhergehenden Ansprüche, **dadurch gekennzeichnet, dass** sie Bestandteil eines Messsystems ist, das die Messsonde (1) und das mit dem freien Innenraum des inneren Schutzrohres (5) und/oder der Schutzkappe (9) in der Inertgas führenden Leitungsverbindung stehendes Ausgleichsbehältnis, insbesondere Membrangefäß, umfasst.

9. Messsystem umfassend eine Messsonde (1) nach einem der Ansprüche 1 - 8 und ein mit dem freien Innenraum des inneren Schutzrohres (5) und/oder der Schutzkappe (9) in einer Inertgas führenden Leitungsverbindung stehendes Ausgleichsbehältnis, insbesondere Membrangefäß.

10. Verwendung einer Messsonde nach einem der Ansprüche 1 - 8 oder eines Messsystems nach Anspruch 9 als Tauchsonde zur kontinuierlichen Dauertemperaturmessung in schmelzflüssigen Medien, die eine Temperatur zwischen 1.000 °C und 2.100 °C aufweisen.

## Claims

1. Measuring probe (1) comprising a probe head (2) and a probe body (3), which is arranged thereat and which comprises an outer protective cap (9), which is secured by its open end in the probe head (2), of a high-density ceramic refractory material and an inner protective pipe (5), which is arranged coaxially in the protective cap with formation of an intermediate space and which is similarly secured in the probe head (2), of a high-temperature-resistant insulating material, in which a thermoelement (6) is arranged, the measuring tip (7) of which is disposed in the end region of the inner protective pipe (5) remote from the probe head (2), wherein the outer protective cap (9) is of gas-tight construction and is gas-tightly secured in the probe head (2) and the free interior space of
the protective cap (9) and the free interior space of the inner protective pipe (5) are filled with an inert gas and disposed in mutual flow connection conducting inert gas, **characterised in that**
the probe head (2) has an inert gas feed line (10) which is in an inert-gas conducting flow and/or Iline connection with the end of the protective pipe (5) facing the probe head (2), the probe head (2) has an inert gas discharge line (13), which is in an inert-gas conducting flow and/or line connection with the open end of the protective cap (9) facing the probe head (2) and
the inert gas feed line (10) and the inert gas discharge line (13) are so disposed in an inert-gas conducting line connection with a remotely arranged compensating container that an inert-gas circuit is formed and maintained between the compensating container and the free interior space of the measuring probe (1), which compresses or expands inert gas present in the measuring probe (1) in dependence on temperature fluctuations and delivers temperature-dependent inert gas to the compensating container or receives it from the compensating vessel.

2. Measuring probe according to the preceding claim, **characterised in that** an inlet valve (10) is arranged in the inert gas feed line (10) and an outlet valve (15) in the inert gas discharge line (13).

3. Measuring probe according to claim 1, **characterised in that** the free interior space of the protective cap (9) and/or the free interior space of the protective pipe (5) is or are filled with powder material having an insulating effect.

4. Measuring probe according to claim 3, **characterised in that** the powder material consists of or contains silicon nitride or aluminium oxide.

5. Measuring probe according to any one of the preceding claims, **characterised in that** the insulating material of the protective pipe (5) consists of or contains aluminium oxide.

6. Measuring probe according to any one of the preceding claims, **characterised in that** the outer protective cap (9) consists of a high-purity silicon carbide or silicon nitride or a high-purity boron carbide or boron nitride.

7. Measuring probe according to any one of the preceding claims, **characterised in that** the thermocouple of the thermoelement (6) consists of a tungsten alloy and/or platinum alloy and/or the thermocouple or the thermoelement (6) is of type B, R, S, G, C or D.

8. Measuring probe according to any one of the preceding claims, **characterised in that** it is a component of a measuring system, which comprises the measuring probe (1) and the compensating container, particularly diaphragm vessel, disposed in the inert-gas conducting line connection with the free interior space of the inner protective pipe (5) and/or of the protective cap (9).

9. Measuring system comprising a measuring probe (1) according to any one of claims 1 to 8 and a compensating container, particularly diaphragm vessel, disposed in an inert-gas conducting line connection with the free interior space of the inner protective pipe (5) and/or of the protective cap (9).

10. Use of a measuring probe according to any one of claims 1 to 8 or of a measuring system according to claim 9 as an immersion probe for continuous ongoing temperature measurement in molten media having a temperature between 1,000° C and 2,100° C.

## Revendications

1. Sonde de mesure (1) comprenant une tête de sonde (2) et un corps de sonde (3) disposé contre celle-ci, qui présente un capuchon de protection externe (9) fixé avec son extrémité ouverte dans la tête de sonde (2), constitué d'un matériau réfractaire céramique très comprimé, et un tube de protection interne (5) qui y est disposé en position coaxiale en formant un espace intermédiaire et qui est également fixé dans la tête de sonde (2), constitué d'un matériau isolant résistant aux températures élevées, dans lequel est disposé un thermoélément (6) dont la pointe de mesure (7) se trouve dans la zone terminale du tube de protection interne (5), qui se détourne de la tête de sonde (2), dans laquelle le capuchon de protection externe (9) est réalisé pour être étanche aux gaz et est fixé dans la tête de sonde (2) d'une manière étanche aux gaz, et l'espace interne libre du capuchon de protection (9) ainsi que l'espace interne libre du tube de protection interne (5) sont remplis avec un gaz inerte et sont reliés l'un à l'autre via une liaison d'écoulement guidant le gaz inerte, **caractérisée en ce que** la tête de sonde (2) présente une entrée pour le gaz inerte (10) qui est mise en relation d'écoulement et/ou de conduction guidant le gaz inerte avec l'extrémité du tube de protection (5) tournée vers la tête de sonde (2) et **en ce que** la tête de sonde (2) présente une sortie pour le gaz inerte (13) qui est mise en relation d'écoulement et/ou de conduction guidant le gaz inerte avec l'extrémité ouverte du capuchon de protection (9) tournée vers la tête de sonde (2), et **en ce que** l'entrée pour le gaz inerte (10) et la sortie pour le gaz inerte (13) sont mises en relation de conduction guidant le gaz inerte avec un récipient de compensation disposé à distance, d'une manière telle que, entre le récipient de compensation et l'espace interne libre de la sonde de mesure (1), on obtient et on maintient une circulation de gaz inerte qui, par le fait que le gaz inerte se trouvant dans la sonde de mesure (1) se comprime et se dilate en fonction des fluctuations de la température, évacue du gaz inerte dans le récipient de compensation ou en prélève à partir du récipient de compensation, en fonction de la température.

2. Sonde de mesure selon l'une quelconque des revendications précédentes, **caractérisée en ce qu'**une soupape d'entrée (12) est disposée dans l'entrée pour le gaz inerte (10) et une soupape de sortie (15) est disposée dans la sortie pour le gaz inerte (13).

3. Sonde de mesure selon la revendication 1, **caractérisée en ce que** l'espace interne libre du capuchon de protection (9) et/ou l'espace interne libre du tube de protection (5) est/sont rempli(s) avec une matière pulvérulente faisant office d'isolant.

4. Sonde de mesure selon la revendication 3, **caractérisée en ce que** la matière pulvérulente est constituée de nitrure de silicium au d'oxyde d'aluminium ou contient ces derniers.

5. Sonde de mesure selon l'une quelconque des revendications précédentes, **caractérisée en ce que** la matière isolante du tube de protection (5) est constituée d'oxyde d'aluminium ou contient ce dernier.

6. Sonde de mesure selon l'une quelconque des revendications précédentes, **caractérisée en ce que** le capuchon de protection externe (9) est constitué de carbure ou de nitrure de silicium de pureté élevée ou bien est constitué d'un carbure ou d'un nitrure de bore de pureté élevée.

7. Sonde de mesure selon l'une quelconque des revendications précédentes, **caractérisée en ce que** les thermocouples du thermoélément (6) sont constituées d'un alliage à base de tungstène et/ou de platine et/ou les thermocouples ou le thermoélément (6) est/sont du type B, R, S, G, C ou D.

8. Sonde de mesure selon l'une quelconque des revendications précédentes, **caractérisée en ce qu'**elle représente un constituant d'un système de mesure qui comprend la sonde de mesure (1) et le récipient de compensation, en particulier un récipient à membrane, mis en liaison de conduction guidant le gaz inerte, avec l'espace interne libre du tube de protection interne (5) et/ou du capuchon de protection (9).

9. Système de mesure comprenant une sonde de mesure (1) selon l'une quelconque des revendications 1 à 8 et un récipient de compensation, en particulier un récipient à membrane, mis en liaison de conduction guidant le gaz inerte, avec l'espace interne libre du tube de protection interne (5) et/ou du capuchon de protection (9).

10. Utilisation d'une sonde de mesure selon l'une quelconque des revendications 1 à 8 ou d'un système de mesure selon la revendication 9, sous la forme d'une sonde d'immersion pour la mesure en continu d'une température constante dans des milieux en fusion, qui présentent une température entre 1000 °C et 2100 °C.
